# EUROPÄISCHE PATENTSCHRIFT

(11) **EP 2 861 913 B1**
(45) Veröffentlichungstag und Bekanntmachung des Hinweises auf die Patenterteilung: **29.03.2017**
(21) Anmeldenummer: 13728732.2
(22) Anmeldetag: 12.06.2013
(51) Int. Cl.: F24H 1/00, B60H 1/22, F24H 1/26, F24H 9/00

(54) **WÄRMETAUSCHERANORDNUNG**
HEAT EXCHANGER
ÉCHANGEUR DE CHALEUR

(30) Priorität: 13.06.2012 DE 102012209894; 14.08.2012 DE 102012214480
(43) Veröffentlichungstag der Anmeldung: 22.04.2015
(73) Patentinhaber: Eberspächer Climate Control Systems GmbH & Co. KG, 73730 Esslingen (DE)
(72) Erfinder: COLLMER, Andreas, 73773 Aichwald (DE); HAEFNER, Michael, 70469 Stuttgart (DE)
(74) Vertreter: Ruttensperger, Bernhard
(86) Internationale Anmeldenummer: PCT/EP2013/062169
(87) Internationale Veröffentlichungsnummer: WO 2013/186268

(56) Entgegenhaltungen:
- EP-A2- 1 935 685
- DE-A1-102004 019 554
- DE-A1-102005 058 204
- DE-A1-102009 046 781
- DE-C1- 10 143 479
- US-A- 5 983 841

## Beschreibung

Die vorliegende Erfindung betrifft eine Wärmetauscheranordnung, insbesondere für ein Fahrzeugheizgerät, umfassend:
- ein topfartiges inneres Wärmetauschergehäuse mit einer ersten Bodenwandung und einer an die erste Bodenwandung anschließenden, eine Längsachse umgebenden ersten Umfangswandung,
- ein topfartiges äußeres Wärmetauschergehäuse mit einer zweiten Bodenwandung und einer an die zweite Bodenwandung anschließenden, die Längsachse umgebenden zweiten Umfangswandung,
- einen zwischen dem inneren Wärmetauschergehäuse und dem äußeren Wärmetauschergehäuse gebildeten Fluidströmungsraum,
- eine im Wesentlichen in Richtung der Längsachse sich entlang der ersten Umfangswandung und der zweiten Umfangswandung erstreckende erste Strömungsführungsformation und eine im Wesentlichen in Richtung der Längsachse sich entlang der ersten Umfangswandung und der zweiten Umfangswandung in Umfangsabstand zur ersten Strömungsführungsformation erstreckende zweite Strömungsführungsformation, wobei die erste Strömungsführungsformation und die zweite Strömungsführungsformation den zwischen der ersten Umfangswandung und der zweiten Umfangswandung gebildeten Teil des Fluidströmungsraums in einen ersten Teilströmungsraum und einen zweiten Teilströmungsraum unterteilen,
- wenigstens eine zum ersten Teilströmungsraum offene Fluideintrittsöffnung und wenigstens eine zum zweiten Teilströmungsraum offene Fluidaustrittsöffnung,
- eine Presssitzformation zum Fixieren des inneren Wärmetauschergehäuses bezüglich des äußeren Wärmetauschergehäuses.

Aus der DE 101 43 479 C1 ist eine derartige Wärmetauscheranordnung mit zwei ineinander eingesetzten, topfartigen Wärmetauschergehäusen bekannt. Der zwischen diesen eingeschlossene Fluidströmungsraum ist durch zwei in Umfangsabstand zueinander angeordnete Strömungsführungsformationen in zwei Teilströmungsräume unterteilt, so dass das über eine Eintrittsöffnung zugeführte Fluid in einen der Teilströmungsräume eintritt, dort bis zu dem zwischen den beiden Bodenwandungen gebildeten Bereich des Fluidströmungsraums gelangt und aus diesem Bereich dann in den zweiten Teilströmungsraum und über diesen zur Austrittsöffnung strömen kann. Im Angrenzungsbereich der Umfangswandungen an die Bodenwandungen der jeweiligen Wärmetauschergehäuse sind in Umfangsrichtung zwischen den Strömungsführungsformationen axial begrenzte Stege am inneren Wärmetauschergehäuse vorgesehen, die in Anlage an gegenüberliegende stegartige Vorsprünge im Angrenzungsbereich der Umfangswandung des äußeren Wärmetauschergehäuses an die Bodenwandung des äußeren Wärmetauschergehäuses gepresst sind und somit in diesem Angrenzungsbereich der Umfangswandungen an die Bodenwandungen eine Presssitzformation bilden, durch welche die beiden Wärmetauschergehäuse fest aneinander gehalten sind. Dadurch sind die beiden Wärmetauschergehäuse im Bereich dieser Presssitzformationen in direktem Wärmeübertragungskontakt, so dass die zur Wärmeübertragung effizient nutzbare Oberfläche der Wärmetauscheranordnung vergrößert werden kann.

Aus der DE 10 2005 058 204 A1 ist eine Wärmetauscheranordnung gemäß dem Oberbegriff des Anspruchs 1 bekannt, bei welcher an einem topfartigen inneren Wärmetauschergehäuse durch daran vorgesehene und nach radial außen vorspringende Stege ein mäanderartig ausgebildeter Strömungsweg für das die Wärmetauscheranordnung durchströmende Fluid generiert wird.

Es ist die Aufgabe der vorliegenden Erfindung, eine Wärmetauscheranordnung, insbesondere für ein Fahrzeugheizgerät vorzusehen, welche bei vereinfachter Montierbarkeit ein verbessertes Wärmeübertragungsvermögen gewährleistet.

Erfindungsgemäß wird diese Aufgabe gelöst durch eine Wärmetauscheranordnung, insbesondere für ein Fahrzeugheizgerät, gemäß Anspruch 1. Diese umfasst:
- ein topfartiges inneres Wärmetauschergehäuse mit einer ersten Bodenwandung und einer an die erste Bodenwandung anschließenden, eine Längsachse umgebenden ersten Umfangswandung,
- ein topfartiges äußeres Wärmetauschergehäuse mit einer zweiten Bodenwandung und einer an die zweite Bodenwandung anschließenden, die Längsachse umgebenden zweiten Umfangswandung,
- einen zwischen dem inneren Wärmetauschergehäuse und dem äußeren Wärmetauschergehäuse gebildeten Fluidströmungsraum,
- eine im Wesentlichen in Richtung der Längsachse sich entlang der ersten Umfangswandung und der zweiten Umfangswandung erstreckende erste Strömungsführungsformation und eine im Wesentlichen in Richtung der Längsachse sich entlang der ersten Umfangswandung und der zweiten Umfangswandung in Umfangsabstand zur ersten Strömungsführungsformation erstreckende zweite Strömungsführungsformation, wobei die erste Strömungsführungsformation und die zweite Strömungsführungsformation den zwischen der ersten Umfangswandung und der zweiten Umfangswandung gebildeten Teil des Fluidströmungsraums in einen ersten Teilströmungsraum und einen zweiten Teilströmungsraum unterteilen,
- wenigstens eine zum ersten Teilströmungsraum offene Fluideintrittsöffnung und wenigstens eine zum zweiten Teilströmungsraum offene Fluidaustrittsöffnung,
- eine Presssitzformation zum Fixieren des inneren Wärmetauschergehäuses bezüglich des äußeren Wärmetauschergehäuses.

Dabei ist weiter vorgesehen, dass die Presssitzformation die erste Strömungsführungsformation und die zweite Strömungsführungsformation umfasst.

Sind die Strömungsführungsformationen Teil der Presssitzformation bzw. ist die Presssitzformation im Wesentlichen durch die Strömungsführungsformationen bereitgestellt, so müssen keine weiteren baulichen Maßnahmen vorgesehen sein, welche durch Erzeugung von Presssitz eine definierte Positionierung und Halterung der beiden Wärmetauschergehäuse bezüglich einander ermöglichen. Wird diese Funktionalität der Presssitzformation durch die Strömungsführungsformationen mit übernommen, so sind an den beiden Wärmetauschergehäusen keine weiteren baulichen Maßnahmen erforderlich, um diese Presssitzfunktionalität erfüllen zu können. Infolgedessen können die beiden Wärmetauschergehäuse hinsichtlich anderer Funktionalitäten, insbesondere der Strömungsführungsfunktionalitäten oder der Wärmeübertragungsfunktionalitäten, optimiert ausgestaltet werden.

Um einen dichten Abschluss des Fluidströmungsraums im Angrenzungsbereich der beiden Wärmetauschergehäuse aneinander zu erlangen, wird vorgeschlagen, dass der Fluidströmungsraum im Endbereich durch eine zwischen dem inneren Wärmetauschergehäuse und dem äußeren Wärmetauschergehäuse wirkende Dichtungsformation fluiddicht abgeschlossen ist.

Ferner kann vorgesehen sein, dass die Presssitzformation in einem von der ersten Bodenwandung und der zweiten Bodenwandung entfernt liegenden Endbereich der Umfangswandungen vorgesehen ist. Ist die Presssitzformation nicht, wie dies aus dem Stand der Technik bekannt ist, im Angrenzungsbereich der Umfangswandungen an die jeweiligen Bodenwandungen der Wärmetauschergehäuse vorgesehen, sondern im Endbereich der Umfangswandungen, also demjenigen Bereich, in welchem diese entfernt von den Bodenwandungen liegen, so ist dafür gesorgt, dass insbesondere in demjenigen Bereich, in welchem die beiden Umfangswandungen auch dicht aneinander anzuschließen sind, eine definierte Positionierung der beiden Wärmetauschergehäuse bezüglich einander erzwungen ist und somit eine dort auch wirkende Dichtungsformation ohne der Gefahr einer lokalen übermäßigen Belastung in definierter Art und Weise zwischen den beiden Wärmetauschergehäusen positioniert und auch gehalten werden kann.

Zur Erzeugung einer ausreichend stabilen Halterungsfunktion zwischen den beiden Wärmetauschergehäusen wird vorgeschlagen, dass die Presssitzformation in Richtung der Längsachse eine Erstreckungslänge im Bereich von 0,2 bis 0,6, vorzugsweise etwa 0,4, der Erstreckungslänge der ersten Umfangswandung in Richtung der Längsachse aufweist.

Um in baulich einfacher Weise eine definierte und gegen Leckagen auch sichere Strömungsführungsfunktion erlangen zu können, umfasst jede Strömungsführungsformation an einer Umfangswandung von erster Umfangswandung und zweiter Umfangswandung einen radial vorspringenden ersten Steg und an der anderen Umfangswandung von erster Umfangswandung und zweiter Umfangswandung eine den ersten Steg aufnehmende Einsenkung. Dabei kann zum Vermeiden von lokalen dünnwandigen Bereichen von einem der Wärmetauschergehäuse vorgesehen sein, dass die Einsenkung zwischen zwei in Umfangsabstand zueinander von der anderen Umfangswandung radial vorspringenden zweiten Stegen gebildet ist.

Vorteilhafterweise stellt die erste Umfangswandung die eine Umfangswandung und die zweite Umfangswandung die andere Umfangswandung bereit.

Eine gegen Leckageströmungen gesicherte Strömungsführungsfunktionalität mit einer Dichtfunktion nach Art einer Labyrinthdichtung kann dadurch in einfacher Weise erreicht werden, dass eine Einsenkungsbreite wenigstens bereichsweise im Wesentlichen einer Stegbreite des in diese eingreifenden ersten Stegs entspricht.

Die Bereitstellung der Funktionalität der Presssitzformation durch die Strömungsführungsformationen kann in einfacher Weise dadurch erreicht werden, dass die Presssitzformation an wenigstens einer Strömungsführungsformation jeweils eine nach radial außen orientierte erste Presssitzfläche und eine nach radial innen orientierte und gegen die erste Presssitzfläche gepresste zweite Presssitzfläche umfasst.

Zur Funktionenverschmelzung von Presssitzformation und Strömungsführungsformation kann bei dem vorangehend beschriebenen Aufbau der Strömungsführungsformationen vorgesehen sein, dass wenigstens ein, vorzugsweise jeder erste Steg mit seiner radial orientierten Stirnfläche eine Presssitzfläche von erster Presssitzfläche und zweiter Presssitzfläche bereitstellt und dass wenigstens eine, vorzugsweise jede Einsenkung mit ihrer radial orientierten Einsenkungsbodenfläche die andere Presssitzfläche von erster Presssitzfläche und zweiter Presssitzfläche bereitstellt.

Um eine Überbestimmung in der Relativpositionierung der beiden Wärmetauschergehäuse bezüglich einander zu vermeiden, wird vorgeschlagen, dass in einem an die Presssitzformation anschließenden Längenbereich der wenigstens einen Strömungsführungsformation die Stirnflächen des wenigstens einen ersten Stegs in Radialabstand zu der zugeordneten Einsenkungsbodenfläche liegt, wobei vorteilhafterweise vorgesehen sein kann, dass der Längenbereich sich ausgehend von der Presssitzformation bis zu einem Angrenzungsbereich der Umfangswandungen an die Bodenwandungen erstreckt.

Bei einer alternativen Ausgestaltungsart wird vorgeschlagen, dass die Presssitzformation an wenigstens einer Strömungsführungsformation wenigstens eine in einer ersten Umfangsrichtung orientierte erste Presssitzfläche und wenigstens eine in einer der ersten Umfangsrichtung entgegengesetzten zweiten Umfangsrichtung orientierte und gegen die wenigstens eine erste Presssitzfläche gepresste zweite Presssitzfläche umfasst. Durch das Bereitstellen von in Umfangsrichtung orientierten und gegeneinander gepressten Presssitzflächen wird bei Erzeugung des Presssitzes eine Radialbelastung der miteinander in Eingriff zu bringenden Baugruppen, also der beiden Wärmetauschergehäuse, und eine damit möglicherweise erzeugte Beeinträchtigung des zwischen diesen herzustellenden fluiddichten Abschlusses vermieden. Um auch bei dieser Ausgestaltungsvariante eine Funktionenverschmelzung zu erreichen, wird vorgeschlagen, dass wenigstens ein, vorzugsweise jeder erste Steg mit seinen in Umfangsrichtung orientierten Stegseitenflächen jeweils eine erste Presssitzfläche bereitstellt und dass wenigstens eine, vorzugsweise jede Einsenkung mit ihren in Umfangsrichtung orientierten Einsenkungsseitenflächen jeweils eine zweite Presssitzfläche bereitstellt. Um auch bei in Umfangsrichtung erzeugter Presssitzwirkung eine Überbestimmung der gegenseitigen Halterung der beiden Wärmetauschergehäusen bezüglich einander zu vermeiden, wird vorgeschlagen, dass in einem an die Presssitzformation anschließenden Längenbereich der Strömungsführungsformationen die Stegseitenflächen in Umfangsabstand zu den zugeordneten Einsenkungsseitenflächen liegen, wobei vorteilhafterweise der Längenbereich sich ausgehend von der Presssitzformation bis zu einem Angrenzungsbereich der Umfangswandungen an die Bodenwandungen erstreckt.

Die Erfindung betrifft ferner ein Fahrzeugheizgerät, umfassend einen mit Verbrennungsluft und Brennstoff zu speisenden Brennerbereich und eine erfindungsgemäße Wärmetauscheranordnung zur Übertragung von im Brennerbereich generierter Verbrennungswärme auf ein den Fluidströmungsraum durchströmendes Fluid, vorzugsweise Flüssigkeit.

Die vorliegende Erfindung wird nachfolgend mit Bezug auf die beiliegenden Figuren detailliert beschrieben. Es zeigt:
- Fig. 1: eine längs einer Längsachse geschnitten dargestellte Wärmetauscheranordnung, geschnitten in einer Ebene I-I in Fig. 2;
- Fig. 2: eine Querschnittdarstellung der Wärmetauscheranordnung in Fig. 1, geschnitten längs einer Linie II-II in Fig. 1;
- Fig. 3: eine perspektivische Darstellung der Wärmetauscheranordnung mit teilweise geschnitten dargestelltem äußeren Wärmetauschergehäuse;
- Fig. 4: eine der Fig. 3 entsprechende perspektivische Darstellung mit im Längsschnitt dargestelltem äußeren Wärmetauschergehäuse;
- Fig. 5: eine perspektivische Darstellung der Wärmetauscheranordnung mit im Querschnitt dargestelltem äußeren Wärmetauschergehäuse;
- Fig. 6: eine Teil-Radialansicht des inneren Wärmetauschergehäuses mit einem ersten Steg zugeordneten zweiten Stegen in Schnittdarstellung.

In den Figuren ist eine Wärmetauscheranordnung, wie sie beispielsweise in einem brennstoffbetriebenen Fahrzeugheizgerät in Verbindung mit einem mit Brennstoff und Verbrennungsluft zu speisenden Brennerbereich eingesetzt werden kann, allgemein mit 10 bezeichnet. Die Wärmetauscheranordnung 10 umfasst ein topfartiges inneres Wärmetauschergehäuse 12 und ein dieses im Wesentlichen umgebendes topfartiges äußeres Wärmetauschergehäuse 14. Das innere Wärmetauschergehäuse 12 umfasst eine im Wesentlichen quer zu einer Längsachse L orientierte erste Bodenwandung 16 und eine daran anschließende und im Wesentlichen längs der Längsachse L diese umgebend sich erstreckende erste Umfangswandung 18. Gleichermaßen umfasst das äußere Wärmetauschergehäuse 14 eine zur Längsachse L im Wesentlichen quer orientierte zweite Bodenwandung 20 und an diese anschließend eine die Längsachse L umgebende und entlang dieser sich erstreckende zweite Umfangswandung 22.

Das innere Wärmetauschergehäuse 12 und das äußere Wärmetauschergehäuse 14 begrenzen zwischen ihren Bodenwandungen 16, 20 und ihren Umfangswandungen 18, 22 einen allgemein mit 24 bezeichneten Strömungsführungsraum für ein in der Wärmetauscheranordnung 10 zu erwärmendes Fluid, beispielsweise eine Flüssigkeit. Dieser Strömungsraum 24 umfasst einen zwischen den beiden Bodenwandungen 16, 20 gebildeten Teil 26 und einen zwischen den beiden Umfangswandungen 18, 22 gebildeten Teil 28.

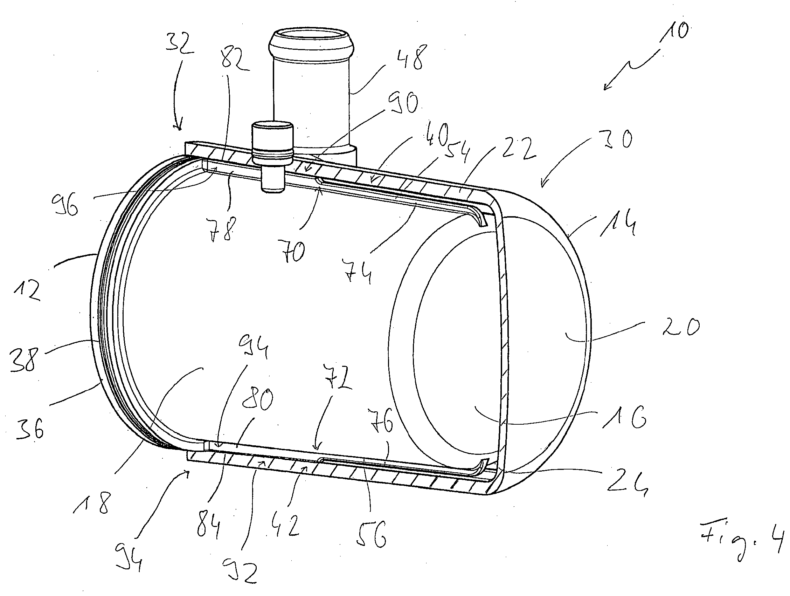

In einem vom Angrenzungsbereich 30 der Umfangswandungen 18, 22 an die Bodenwandungen 16, 20 entfernt liegenden Endbereich 32 sind die beiden Wärmetauschergehäuse 12, 14 bzw. deren Umfangswandungen 18, 20 fluiddicht aneinander angeschlossen. Hierzu dient ein zwischen den beiden Wärmetauschergehäusen 12, 14 eingesetztes, beispielsweise als O-Ring ausgebildetes Dichtungselement 34. Dieses kann, wie beispielsweise in Fig. 4 veranschaulicht, in einem nach radial außen vorspringenden Umfangsbund 36 des inneren Wärmetauschergehäuses 12 bzw. einer in diesem Bund vorgesehenen Nut 38 aufgenommen sein und somit dichtend an einer gegenüberliegenden Oberfläche der zweiten Umfangswandung 22 des äußeren Wärmetauschergehäuses 14 anliegen.

Durch eine erste Strömungsführungsformation 40 und eine zweite Strömungsführungsformation 42, welche zwischen den beiden Umfangswandungen 18, 22 wirken, ist der zwischen den beiden Umfangswandungen 18, 22 gebildete Teil 28 des Fluidströmungsraums 24 in einen ersten Teilströmungsraum 44 und einen zweiten Teilströmungsraum 46 unterteilt. Diese beiden Teilströmungsräume 44, 46 schließen im Angrenzungsbereich 30 an den zwischen den beiden Bodenwandungen 16, 20 gebildeten Teil 26 des Fluidströmungsraums 24 an. Über eine im Bereich eines Einlassstutzens 48 gebildete Eintrittsöffnung 49 kann Fluid in den ersten Teilströmungsraum 44 eingeleitet werden. Geführt durch die beiden beispielsweise bezüglich der Längsachse L einander im Wesentlichen diametral gegenüberliegenden Strömungsführungsanordnungen 40, 42 strömt das so in den Fluidströmungsraum 24 gelangte Fluid in Richtung zum Angrenzungsbereich 30 und in den Teil 26 des Fluidströmungsraums 24. Von dort gelangt es in den zweiten Teilströmungsraum 46 und strömt zurück in Richtung zum Endbereich 32. Durch eine im Bereich eines Auslassstutzens 50 gebildete Austrittsöffnung 51 verlässt das durch thermische Wechselwirkung mit den beiden Wärmetauschergehäusen 12, 40 erwärmte Fluid den Fluidströmungsraum 24. Um für diese thermische Wechselwirkung eine möglichst große Wechselwirkungsoberfläche bereitstellen zu können, kann beispielsweise das innere Wärmetauschergehäuse 12 an seiner vom Fluidströmungsraum 24 abgewandten Innenseite eine Vielzahl von Wärmeübertragungsrippen 52 aufweisen, welche die Wechselwirkungsoberfläche mit den in diesen Bereich strömenden Verbrennungsabgasen vergrößern.

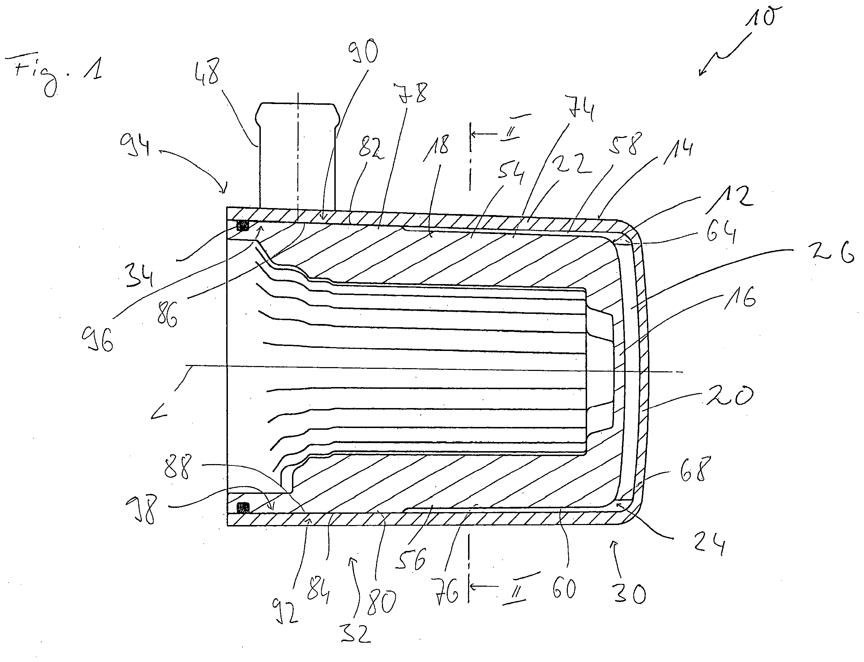

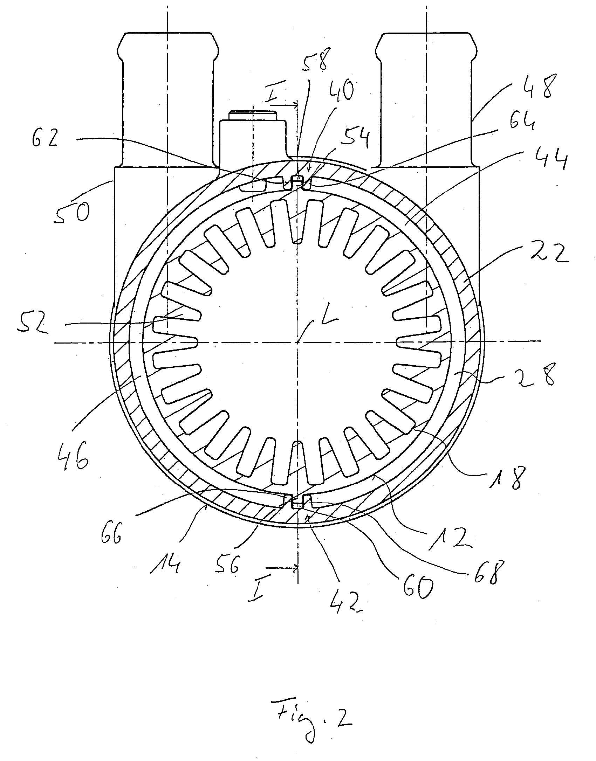

Die beiden Strömungsführungsformationen 40, 42 erstrecken sich vorteilhafterweise im Wesentlichen in Richtung der Längsachse L im Wesentlichen über die gesamte Erstreckungslänge der Umfangswandungen 18, 22. Es sei in diesem Zusammenhang darauf hingewiesen, dass der Umstand, dass beispielsweise die Umfangswandungen 18, 22 zumindest bereichsweise mit zunehmendem Radialabstand zur Längsachse L ausgebildet sein können, dem nicht entgegensteht, dass die Strömungsführungsformationen 40, 42 sich entlang dieser Längsachse L erstrecken können. Insbesondere erkennt man in Fig. 2, dass diese beiden Strömungsführungsformationen näherungsweise in einer auch die Längsachse L enthaltenden und der Schnittebene der Fig. 1 entsprechenden Ebene liegen bzw. bezüglich dieser zentriert angeordnet sind.

Jede der Strömungsführungsformationen 40, 42 umfasst an der Außenseite der ersten Umfangswandung 18 einen in Richtung der Längsachse L sich erstreckenden, nach radial außen vorspringenden ersten Steg 54, 56. Jedem ersten Steg 54, 56 zugeordnet ist an der Umfangswandung 22 des äußeren Wärmetauschergehäuses 14 eine diesen aufnehmende Einsenkung 58, 60 zugeordnet. Um lokal zu dünne Wandungsbereiche des äußeren Wärmetauschergehäuses 14 zu vermeiden, ist zumindest eine dieser Einsenkungen 58, 60 zwischen zwei von der Umfangswandung 22 nach radial innen vorspringenden, sich im Wesentlichen in Richtung der Längsachse L erstreckenden zweiten Stegen 62, 64 bzw. 66, 68 gebildet. Zum Erhalt eines im Wesentlichen fluiddichten und Leckageströmungen vermeidenden Anschlusses entspricht dabei vorteilhafterweise die Umfangsbreite der ersten Stege 54, 56 näherungsweise dem Umfangsabstand der beiden einen jeweiligen ersten Steg 54, 56 zwischen sich aufnehmenden zweiten Stege 62, 64 bzw. 66, 68. Auf diese Art und Weise wird zwischen den ersten Stegen 54, 56 und den zweiten Stegen 62, 64, 66, 68 eine Dichtungsfunktionalität nach Art einer Labyrinthdichtung erzielt.

In den Fig. 1 und 4 ist deutlich erkennbar, dass die beiden ersten Stege 54, 56 der Strömungsführungsformationen 40, 42 derart ausgebildet sind, dass ihre radiale Vorsprungshöhe über die Außenumfangsfläche der ersten Umfangswandung 18 sich bei einem Übergangsbereich 70, 72 z. B. stufenartig ändert. In einem vom Angrenzungsbereich 30 bis zu den Übergangsbereich 70 bzw. 72 sich entlang der in Umfangswandung 18 erstreckenden Abschnitt 74 bzw. 76 der ersten Stege 54 bzw. 56 weisen diese eine geringere, vorzugsweise im Wesentlichen konstante Vorsprungshöhe auf, als in einem vom Übergangsbereich 70 bzw. 72 sich erstreckenden Abschnitt 78 bzw. 80. Dies führt zu einer Konfiguration, bei welcher die Abschnitte 78, 80 mit den in diesen Bereichen vorgesehenen und nach radial außen orientierten Stirnflächen 82 bzw. 84 im Zusammenbauzustand unter Presspassung anliegen an einer jeweiligen Einsenkungsbodenfläche 86, 88 der die ersten Stege 54, 56 aufnehmenden Einsenkungen 58, 60. Die an den ersten Stegen 54, 56 gebildeten, nach radial außen orientierten Stirnflächen 82, 84 stellen dabei jeweilig erste Presssitzformationsflächen 90, 92 einer allgemein mit 94 bezeichneten Presssitzformation bereit, während die nach radial innen orientierten Einsenkungsbodenflächen 86, 88 jeweilige zweite Presssitzformationsflächen 96, 98 der Presssitzformation 94 bereitstellen.

Die Abschnitte 78, 80 der ersten Stege 54, 56 erstrecken sich im Wesentlichen im Endbereich 32 bzw. erstrecken sich ausgehend von einem Bereich an oder nahe dem axialen Ende der ersten Umfangswandung 16 in Richtung auf den Angrenzungsbereich 30 bzw. den ersten Bodenbereich 16 zu. Dabei nehmen die Abschnitte 78, 80 vorteilhafterweise eine Längserstreckung mit einem Anteil im Bereich von 0,2 bis 0,6, vorzugsweise bei etwa 0,4 der axialen Erstreckungslänge der ersten Umfangswandung 18 ein. Dies bedeutet, dass die Abschnitte 78, 80 und mit diesen auch die im Wesentlichen durch die beiden Strömungsführungsformationen 40, 42 bereitgestellte Presssitzformation 94 sich bis in einen mittleren Bereich der Umfangswandungen 18, 22, d. h. in einen axial mittleren Bereich der gesamten Wärmetauscheranordnung 10, erstrecken. Im Bereich der Abschnitte 74, 76 liegen die Stirnflächen der Stege 54, 56 in radialem Abstand zu den Einsenkungsbodenflächen an der zweiten Umfangswandung 22, so dass in dem zwischen der Presssitzformation 94, welche im Wesentlichen axial begrenzt ist an den Übergangsbereichen 70, 72, und dem Angrenzungsbereich 30 die beiden Wärmetauschergehäuse 12, 14 in Abstand zueinander liegen. Es ist somit gewährleistet, dass der Bereich der gegenseitigen Fixierung axial beschränkt ist und somit eine Überbestimmung in der gegenseitigen Positionierung der beiden Gehäuseteile 12, 14 vermieden werden kann. Gleichwohl ist insbesondere in demjenigen Bereich, in welchem die beiden Wärmetauschergehäuse 12, 14 duch das Dichtungselement 34 gegeneinander abgedichtet sind, für eine definierte und stabile Relativpositionierung gesorgt, welche eine lokale übermäßige Belastung oder zu geringe Belastung des Dichtungselements 34 vermeidet. Gleichwohl sind die beiden Wärmetauschergehäuse 12, 14 mit dem Dichtungselement 34 in einfacher Weise zu einer Vormontagebaugruppe zusammenfassbar.

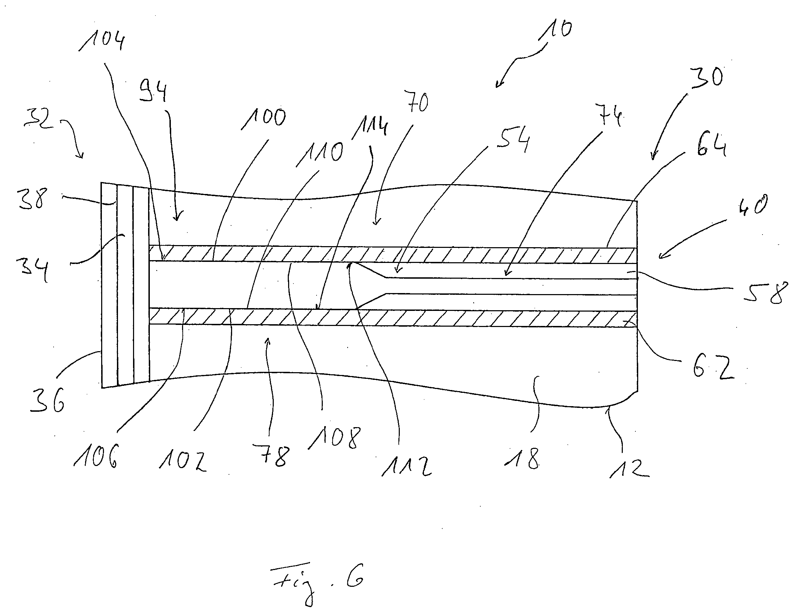

Mit Bezug auf die Fig. 6 wird nachfolgend eine alternative Ausgestaltungsform der Presssitzformation 94 anhand der in Fig. 6 beispielhaft dargestellten ersten Strömungsführungsformation 40 erläutert. Es ist selbstverständlich, dass auch die zweite Strömungsführungsformation in entsprechender Weise ausgebildet sein kann. Der grundsätzliche Aufbau der Wärmetauscheranordnung mit ihren beiden Wärmetauschergehäusen entspricht dem vorangehend ausführlich beschriebenen Aufbau.

Die Presssitzformation 94 umfasst bei der in Fig. 6 dargestellten ersten Strömungsführungsformation 40 in deren Abschnitt 78 in Umfangsrichtung, also in der Darstellung der Fig. 6 nach oben bzw. nach unten orientierte Stegseitenflächen 100, 102, welche jeweilige erste Presssitzflächen 104, 106 der Presssitzformation 94 bereitstellen. Den beiden Stegseitenflächen 100, 102 in Umfangsrichtung gegenüberliegend positioniert sind Einsenkungsseitenflächen 108, 110 der zwischen den beiden zweiten Stegen 62, 64 gebildeten Einsenkung 58. Dabei ist die Einsenkungsseitenfläche 110 eine Stegseitenfläche des zweiten Stegs 62. Die Einsenkungsseitenfläche 108 ist eine Stegseitenfläche des zweiten Stegs 64. Die Einsenkungsseitenflächen 108, 110 stellen jeweilige zweite Presssitzflächen 112, 114 der Presssitzformation 94 bereit.

Angrenzend an den Abschnitt 78 verjüngt sich der erste Steg 54 in einem rampenartig oder stufenartig ausgebildeten Übergangsbereich 70 und erstreckt sich dann mit seinem Abschnitt 74 entlang der zu diesem Abschnitt 74 in Umfangsabstand liegenden zweiten Stege 62, 64 in Richtung zum Angrenzungsbereich 30.

Durch das Bereitstellen der beiden Abschnitte 78, 74 ist auch bei dieser Ausgestaltungsform dafür gesorgt, dass die Länge der Presssitzformation 94 zwischen dem Endbereich 32 und dem Angrenzungsbereich 30 auf denjenigen Bereich beschränkt ist, in welchem das Fluid in die Wärmetauscheranordnung 30 eintritt bzw. aus dieser austritt und in welchem auch eine gegenseitige Abdichtung der beiden Wärmetauschergehäuse bezüglich einander vorgesehen ist. Auch hier kann vorgesehen sein, dass die Länge der Presssitzformation 94 im Bereich von 0,2 bis 0,6, vorzugsweise bei etwa 0,4, der Axialerstreckungsläge der ersten Umfangswandung 18 liegt.

Die Breite des ersten Stegs 54, also dessen Umfangserstreckung, im Abschnitt 78 ist auf die Breite der Einsenkung 58, also den gegenseitigen Abstand der beiden zweiten Stege 62, 64 so abgestimmt, dass beim axialen Ineinandereinschieben der beiden Wärmetauschergehäuse 12, 14 die ersten Presssitzflächen 104, 106 und die zweiten Presssitzflächen 112, 114 gegeneinander gepresst werden und somit eine stabile Halterung der beiden Wärmetauschergehäuse aneinander erzeugen, grundsätzlich aber ein Einschieben ineinander ermöglicht ist. Insbesondere könnte dabei vorgesehen sein, dass beispielsweise die ersten Presssitzflächen 104, 106 zueinander keilartig liegend, also mit zum Endbereich 32 in zunehmendem gegenseitigen Abstand angeordnet sind, während die beiden zweiten Presssitzflächen 112, 114 zueinander im Wesentlichen parallel liegen, also einen gleichbleibenden Abstand in Richtung der Einsenkung 58 aufweisen. Alternativ könnten auch die beiden zweiten Presssitzflächen 112, 114 zum Endbereich 32 hin einen zunehmenden Abstand zueinander aufweisen, so dass auch die Einsenkung 58 zum Endbereich 32 keilförmig erweitert ist.

Durch das Erzeugen eines in Umfangsrichtung wirkenden Presssitzes wird ein radiales Aufspreizen des äußeren Wärmetauschergehäuses 14 im Bereich seiner zweiten Umfangswandung 22 bei der Erzeugung des Presssitzes, also grundsätzlich eine Verformung desselben, vermieden. Entsprechend wird auch eine bei Erzeugung des Presssitzes möglicherweise auftretende Verformung des inneren Wärmetauschergehäuses 12 im Bereich seiner ersten Umfangswandung 18 nach radial innen vermieden. Derartige Verformungen könnten die Dichtfunktionalität des Dichtungselements 34 beeinträchtigen. Dies gestattet bei der in Fig. 6 dargestellten Ausgestaltungsvariante die Erzeugung eines sehr fest wirkenden Presssitzes.

Die vorangehend beschriebenen Ausgestaltungen einer Wärmetauscheranordnung verbinden verschiedene bereits für sich alleine besonders vorteilhafte Aspekte. Zum einen wird dadurch, dass die Strömungsführungsformationen auch die Presssitzformation bereitstellen, eine Funktionenverschmelzung erreicht, welche es ermöglicht, die beiden Wärmetauschergehäuse in anderen Bereichen hinsichtlich relevanter Aspekte, wie z. B. der lokalen Strömungsführung bzw. des Wärmeübertrags, optimiert auszugestalten, ohne auch auf andere Funktionalitäten, wie beispielsweise die Erzeugung eines Presssitzes, Rücksicht nehmen zu müssen. Zum anderen führt die Erzeugung des Presssitzes im Endbereich der Umfangswandungen, also in Abstand zu den jeweiligen Bodenwandungen der Gehäuseteile, dazu, dass dort, wo eine definierte Relativpositionierung der beiden Gehäuse besonders wichtig ist, nämlich dort, wo auch die Dichtwirkung erzielt wird, diese definierte Positionierung erreicht werden kann. Weiterhin verhindert die durch die Strömungsführungsformationen bereitgestellte Presssitzformation insbesondere in demjenigen axialen Bereich, in welchem Fluid in den Fluidströmungsraum eintritt bzw. aus diesem austritt, jedwede Fluidleckage zwischen den beiden Teilströmungsräumen. Dies stellt auch sicher, dass ein am äußeren Wärmetauschergehäuse 14 vorgesehener und in den zweiten Teilströmungsraum 46 eingreifender Temperatursensor 100 exakt die Temperatur erfassen kann, welche das in der Wärmetauscheranordnung 10 thermisch behandelte Fluid im Bereich der Austrittsöffnung 51 aufweist. Dort, wo eine derartige grundsätzlich gleichwohl zu vermeidende Fluidleckage hinsichtlich der Beeinträchtigung der thermischen Effizienz weniger kritisch ist, nämlich näher am Angrenzungsbereich der Umfangswandungen an die jeweiligen Bodenwandungen, ist durch die in die Ensenkungen eingreifenden ersten Stege unter Erzeugung der angesprochenen labyrinthartigen Dichtungswirkung gleichwohl für eine zuverlässige Trennung der beiden Teilströmungsräume gesorgt.

Obgleich aufgrund einer gleichmäßigen Wärmeaufnahmecharakteristik die vorangehend angesprochene und in den Figuren deutlich erkennbare Positionierung der beiden Strömungsführungsformationen mit einem Winkelabstand von 180° bezüglich der Längsachse L besonders vorteilhaft ist, könnten diese auch so angeordnet sein, dass die beiden Teilströmungsräume 44, 46 zueinander unterschiedlich groß sind, also die beiden Strömungsführungsformationen einen Winkelabstand von weniger bzw. mehr als 180° zueinander aufweisen. Auch ist darauf hinzuweisen, dass, obgleich in den Figuren nicht dargestellt, an den beiden Wärmetauschergehäusen 12 oder/und 14 an ihren dem Fluidströmungsraum 24 zugewandt liegenden Oberflächen Strömungsführungsrippen vorgesehen sein können, um das im Fluidströmungsraum 24 strömende Fluid definiert in dafür vorgesehene Bereiche zu leiten. Auch die Erstreckung der Strömungsführungsformationen bzw. der ersten Stege und der diese aufnehmenden Einsenkungen im Wesentlichen über die gesamte Länge der Umfangswandungen in Richtung der Längsachse L ist hinsichtlich der Strömungsführung besonders vorteilhaft. Grundsätzlich könnten beispielsweise die ersten Stege jedoch bereits vor dem Angrenzungsbereich, also in geringfügigem Abstand zu der ersten Bodenwandung enden. Im Sinne der vorliegenden Erfindung bedeutet dies gleichwohl, dass sie sich über die wesentliche Erstreckungslänge der Wärmetauschergehäuse bzw. der Umfangswandungen erstrecken.

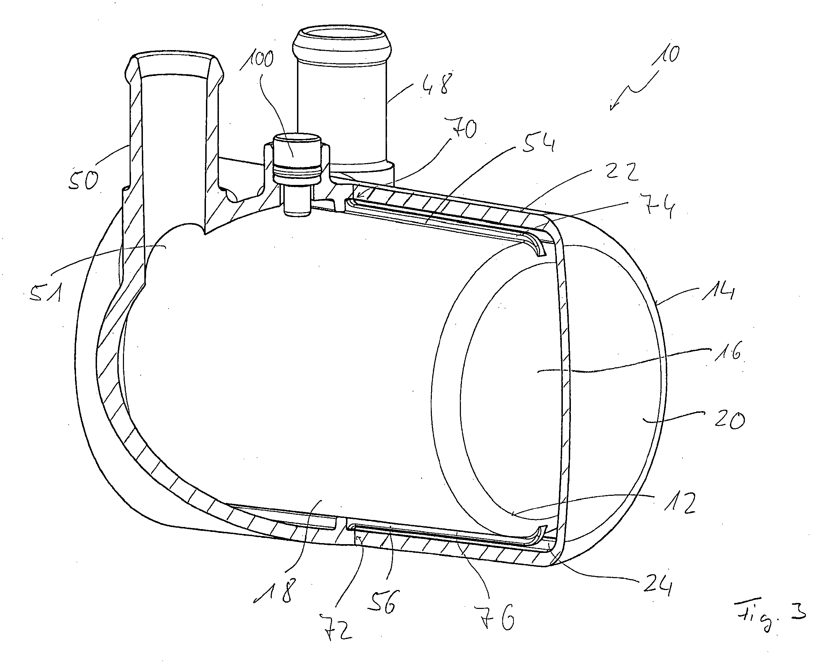

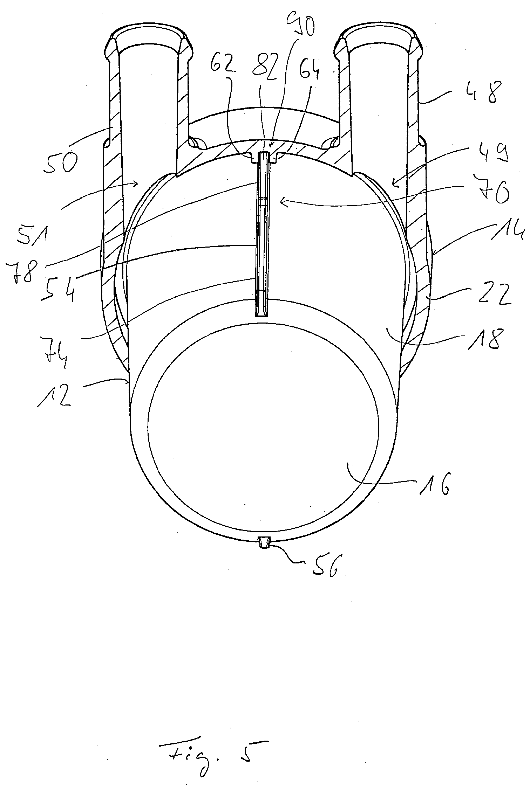

Des Weiteren sei darauf hingewiesen, dass die Strömungsführungsformationen beispielsweise auch mit einer Umfangserstreckungskomponente ausgebildet sein können und sich beispielsweise schraubartig gewunden um die Längsachse L erstrecken können. Das Einführen der ersten Stege in die diese aufnehmenden Einsenkungen wird dann durch eine Axialrelativbewegung und eine Relativdrehbewegung nach Art der Herstellung einer Schraubverbindung erfolgen. Auch eine derartige Erstreckung ist im Sinne der vorliegenden Erfindung als eine Erstreckung der Strömungsführungsformationen im Wesentlichen in Richtung der Längsachse L zu interpretieren. Aus fertigungstechnischen Gründen und auch aus Gründen des einfachen Aufbaus ist jedoch die im Wesentlichen geradlinige Erstreckung, wie sie in den Figuren dargestellt ist, besonders vorteilhaft. Die mit Bezug auf die Ausgestaltungsform der Fig. 1 bis 5 angesprochene radiale Orientierung von Stirn- bzw. Bodenflächen ist im Sinne der vorliegenden Erfindung selbstverständlich nicht nur so zu verstehen, dass dies mit exakt radial orientierter Flächennormale gekrümmte Oberflächen sein müssen. Im Sinne der vorliegenden Erfindung ist hier auch eine Ausgestaltung der in Frage stehenden Fläche mit im Wesentlichen radial orientierter Flächennormale, insbesondere auch ungekrümmte Oberflächen, zu verstehen. Entsprechendes gilt auch für die Steg- bzw. Einsenkungsseitenflächen der Fig. 6. Auch diese Flächen müssen nicht exakt entlang Radiallinien verlaufen, sondern können beispielsweise auch parallel zu einer die Längsachse L schneidenden Radialebene liegen und können als gekrümmte oder ungekrümmte Oberflächen ausgebildet sein.

Bei einer erfindungsgemäß ausgebildeten Wärmetauscheranordnung könnte selbstverständlich auch vorgesehen sein, dass eine der Strömungsführungsformationen den in Fig. 6 dargestellten Aufbau aufweist, also mit Erzeugung eines in Umfangsrichtung wirkenden Presssitzes, während die andere Strömungsführungsformation mit dem in den Fig. 1 bis 5 dargestellten Aufbau, also mit Erzeugung eines in Radialrichtung wirkenden Presssitzes, aufgebaut ist. Unabhängig davon, welche bzw. wie viele der Strömungsführungsformationen mit dem Aufbau gemäß Fig. 6 oder dem Aufbau gemäß den Fig. 1 bis 5 ausgestaltet sind, könnte des Weiteren vorgesehen sein, dass eine oder beide der Strömungsführungsformationen mit einem ersten Steg am äußeren Wärmetauschergehäuse und einer Einsenkung bzw. dem ersten Steg zugeordneten zweiten Stegen am inneren Wärmetauschergehäuse aufgebaut ist.

Die insbesondere in Fig. 1 erkennbare Ausgestaltung, bei welcher die beiden Umfangswandungen mit ihren axialen Enden bündig liegen, also auch radial gestaffelt und bündig zueinander liegende Stirnflächen in den Umfangswandungen bereitstellen, ist ebenfalls zum Erhalt eines einfach realisierbaren Aufbaus vorteilhaft.

## Patentansprüche

1. Wärmetauscheranordnung, insbesondere für ein Fahrzeugheizgerät, umfassend:
- ein topfartiges inneres Wärmetauschergehäuse (12) mit einer ersten Bodenwandung (16) und einer an die erste Bodenwandung (16) anschließenden, eine Längsachse (L) umgebenden ersten Umfangswandung (18),
- ein topfartiges äußeres Wärmetauschergehäuse (14) mit einer zweiten Bodenwandung (20) und einer an die zweite Bodenwandung (20) anschließenden, die Längsachse (L) umgebenden zweiten Umfangswandung (22),
- einen zwischen dem inneren Wärmetauschergehäuse (12) und dem äußeren Wärmetauschergehäuse (14) gebildeten Fluidströmungsraum (24),
- eine im Wesentlichen in Richtung der Längsachse (L) sich entlang der ersten Umfangswandung (18) und der zweiten Umfangswandung (22) erstreckende erste Strömungsführungsformation (40) und eine im Wesentlichen in Richtung der Längsachse (L) sich entlang der ersten Umfangswandung (18) und der zweiten Umfangswandung (22) in Umfangsabstand zur ersten Strömungsführungsformation (40) erstreckende zweite Strömungsführungsformation (42), wobei die erste Strömungsführungsformation (40) und die zweite Strömungsführungsformation (42) den zwischen der ersten Umfangswandung (18) und der zweiten Umfangswandung (22) gebildeten Teil (28) des Fluidströmungsraums (24) in einen ersten Teilströmungsraum (44) und einen zweiten Teilströmungsraum (46) unterteilen, wobei jede Strömungsführungsformation (40, 42) an einer Umfangswandung von erster Umfangswandung (18) und zweiter Umfangswandung (22) einen radial vorspringenden ersten Steg (54, 56) und an der anderen Umfangswandung von erster Umfangswandung (18) und zweiter Umfangswandung (22) eine den ersten Steg (54, 56) aufnehmende Einsenkung (58, 60) umfasst,
- wenigstens eine zum ersten Teilströmungsraum (44) offene Fluideintrittsöffnung (49) und wenigstens eine zum zweiten Teilströmungsraum (46) offene Fluidaustrittsöffnung (51),
**gekennzeichnet durch** eine Presssitzformation (94) zum Fixieren des inneren Wärmetauschergehäuses (12) bezüglich des äußeren Wärmetauschergehäuses (14), wobei die Presssitzformation (94) die erste Strömungsführungsformation (40) und die zweite Strömungsführungsformation (42) zur Herstellung eines Presssitzes durch Axialrelativbewegung des Stegs (54, 56) einer jeweiligen Strömungsführungsformation (40, 42) bezüglich der diesen aufnehmenden Einsenkung (58, 60) umfasst.

2. Wärmetauscheranordnung nach Anspruch 1,
**dadurch gekennzeichnet, dass** der Fluidströmungsraum (24) im Endbereich (32) durch eine zwischen dem inneren Wärmetauschergehäuse (12) und dem äußeren Wärmetauschergehäuse (14) wirkende Dichtungsformation (34) fluiddicht abgeschlossen ist, oder/und dass die Presssitzformation (94) in einem von der ersten Bodenwandung (16) und der zweiten Bodenwandung (20) entfernt liegenden Endbereich (32) der Umfangswandungen (18, 22) vorgesehen ist.

3. Wärmetauscheranordnung nach Anspruch 1 oder 2,
**dadurch gekennzeichnet, dass** die Presssitzformation (94) in Richtung der Längsachse (L) eine Erstreckungslänge im Bereich von 0,2 bis 0,6, vorzugsweise etwa 0,4, der Erstreckungslänge der ersten Umfangswandung (18) in Richtung der Längsachse (L) aufweist.

4. Wärmetauscheranordnung nach einem der Ansprüche 1 bis 3,
**dadurch gekennzeichnet, dass** die Einsenkung (58, 60) zwischen zwei in Umfangsabstand zueinander von der anderen Umfangswandung (22) radial vorspringenden zweiten Stegen (62, 64, 66, 68) gebildet ist.

5. Wärmetauscheranordnung nach einem der Ansprüche 1 bis 4,
**dadurch gekennzeichnet, dass** die erste Umfangswandung (18) die eine Umfangswandung ist und dass die zweite Umfangswandung (22) die andere Umfangswandung ist.

6. Wärmetauscheranordnung nach einem der Ansprüche 1 bis 5,
**dadurch gekennzeichnet, dass** eine Einsenkungsbreite wenigstens bereichsweise im Wesentlichen einer Stegbreite des in diese eingreifenden ersten Stegs (54, 56) entspricht.

7. Wärmetauscheranordnung nach einem der Ansprüche 1 bis 6,
**dadurch gekennzeichnet, dass** die Presssitzformation (94) an wenigstens einer Strömungsführungsformation (40, 42) eine nach radial außen orientierte erste Presssitzfläche (90, 92) und eine nach radial innen orientierte und gegen die erste Presssitzfläche (90, 92) gepresste zweite Presssitzfläche (96, 98) umfasst.

8. Wärmetauscheranordnung nach Anspruch 7,
**dadurch gekennzeichnet, dass** wenigstens ein, vorzugsweise jeder erste Steg (54, 56) mit seiner radial orientierten Stirnfläche (82, 84) eine Presssitzfläche (90, 92) von erster Presssitzfläche (90, 92) und zweiter Presssitzfläche (96, 98) bereitstellt und dass wenigstens eine, vorzugsweise jede Einsenkung (58, 60) mit ihrer radial orientierten Einsenkungsbodenfläche (86, 88) die andere Presssitzfläche (96, 98) von erster Presssitzfläche (90, 92) und zweiter Presssitzfläche (96, 98) bereitstellt.

9. Wärmetauscheranordnung nach Anspruch 8,
**dadurch gekennzeichnet, dass** in einem an die Presssitzformation (94) anschließenden Längenbereich der wenigstens einen Strömungsführungsformation (40, 42) die Stirnflächen (82, 84) des wenigstens einen ersten Stegs (54, 56) in Radialabstand zu der zugeordneten Einsenkungsbodenfläche (86, 88) liegt.

10. Wärmetauscheranordnung nach einem der Ansprüche 1 bis 9,
**dadurch gekennzeichnet, dass** die Presssitzformation (94) an wenigstens einer Strömungsführungsformation (40) wenigstens eine in einer ersten Umfangsrichtung orientierte erste Presssitzfläche (104, 106) und wenigstens eine in einer der ersten Umfangsrichtung entgegengesetzten zweiten Umfangsrichtung orientierte und gegen die wenigstens eine erste Presssitzfläche (104, 106) gepresste zweite Presssitzfläche (112, 114) umfasst.

11. Wärmetauscheranordnung nach Anspruch 10,
**dadurch gekennzeichnet, dass** wenigstens ein, vorzugsweise jeder erste Steg (54) mit seinen in Umfangsrichtung orientierten Stegseitenflächen (100, 102) jeweils eine erste Presssitzfläche (104, 106) bereitstellt und dass wenigstens eine, vorzugsweise jede Einsenkung (58) mit ihren in Umfangsrichtung orientierten Einsenkungsseitenflächen (108, 110) jeweils eine zweite Presssitzfläche (112, 114) bereitstellt.

12. Wärmetauscheranordnung nach Anspruch 11,
**dadurch gekennzeichnet, dass** in einem an die Presssitzformation (94) anschließenden Längenbereich der wenigstens einen Strömungsführungsformation (40) die Stegseitenflächen (100, 102) in Umfangsabstand zu den zugeordneten Einsenkungsseitenflächen (108, 110) liegen.

13. Wärmetauscheranordnung nach Anspruch 9 oder 12,
**dadurch gekennzeichnet, dass** der Längenbereich sich ausgehend von der Presssitzformation (94) bis zu einem Angrenzungsbereich (30) der Umfangswandungen (18, 22) an die Bodenwandungen (16, 20) erstreckt.

14. Fahrzeugheizgerät, umfassend einen mit Verbrennungsluft und Brennstoff zu speisenden Brennerbereich und eine Wärmetauscheranordnung (10) nach einem der vorhergehenden Ansprüchen zur Übertragung von im Brennerbereich generierter Verbrennungswärme auf ein den Fluidströmungsraum (24) durchströmendes Fluid, vorzugsweise Flüssigkeit.

## Claims

1. Heat exchanger arrangement, in particular for a vehicle heating device, comprising:
- a pot-like inner heat exchanger housing (12) with a first bottom wall (16) and a first circumferential wall (18) joining the first bottom wall (16) and surrounding a longitudinal axis (L),
- a pot-like outer heat exchanger housing (14) with a second bottom wall (20) and a second circumferential wall (22) joining the second bottom wall (20) and surrounding the longitudinal axis (L),
- a fluid flow space (24) formed between the inner heat exchanger housing (12) and the outer heat exchanger housing (14),
- a first flow guidance structure (40) extending substantially in the direction of said longitudinal axis (L) along the first circumferential wall (18) and the second circumferential wall (22), and a second flow guidance structure (42) extending substantially in the direction of said longitudinal axis (L) along the first circumferential wall (18) and the second circumferential wall (22) with a circumferential distance to the first flow guidance structure (40),wherein the first flow guidance structure (40) and the second flow guidance structure (42) divide the part (28) of the fluid flow space (24) formed between the first circumferential wall (18) and the second circumferential wall (22) into a first partial flow space (44) and a second partial flow space (46), wherein each flow guidance structure (40, 42) comprises at one circumferential wall out of the first circumferential wall (18) and the second circumferential wall (22) a radially projecting first web (54, 56) and at the other circumferential wall out of the first circumferential wall (18) and the second circumferential wall (22) a depression (58, 60) receiving the first web (54, 56),
- at least one fluid entry opening (49) open towards the first partial flow space (44) and at least one fluid exit opening (51) open towards the second partial flow space (46),
**characterized by** a press fit structure (94) for fixing the inner heat exchanger housing (12) in relation to the outer heat exchanger housing (14), wherein the press fit structure (94) comprises the first flow guidance structure (40) and the second flow guidance structure (42) for forming a press fit seat by an axial movement of the web (54, 56) of a corresponding flow guidance structure (40, 42) in relation to the receiving depression (58, 60).

2. Heat exchanger arrangement according to claim 1,
**characterized in that** the fluid flow space (24) is in its end region (32) closed fluid tightly by a sealing structure (34) acting between the inner heat exchanger housing (12) and the outer heat exchanger housing (14) or/and **in that** the press fit structure (94) is provided in an end region (32) of the circumferential walls (18, 22) remote from the first bottom wall (16) and the second bottom wall (20).

3. Heat exchanger arrangement according to claim 1 or 2,
**characterized in that** the press fit structure (94) has, in the direction of said longitudinal axis (L) an extension length in the range of 0.2 to 0.6, preferably approximately 0.4 of the extension length of the first circumferential wall (18) in the direction of the longitudinal axis (L).

4. Heat exchanger arrangement according to one of claims 1 to 3,
**characterized in that** the depression (58, 60) is formed between two second bars (62, 64, 66, 68) radially projecting from the other circumferential wall (22) formed with a radial distance to one another.

5. Heat exchanger arrangement according to one of claims 1 to 4,
**characterized in that** the first circumferential wall (18) is the one circumferential wall and the second circumferential wall (22) is the other circumferential wall.

6. Heat exchanger arrangement according to one of claims 1 to 5,
**characterized in that** a depression width corresponds at least in certain areas to a bar width of the first bar (54, 56) engaging the latter.

7. Heat exchanger arrangement according to one of claims 1 to 6,
**characterized in that** the press fit structure (94) comprises at least one flow guidance structure (40, 42) a first press fit surface (90, 92) oriented radially outwards and a second press fit surface (96, 98) oriented radially inwards and pressed against the first press fit surface (90, 92).

8. Heat exchanger arrangement according to claim 7,
**characterized in that** at least one, preferably each first web (54, 56) provides with its radially oriented front surface (82, 84) one press fit surface (90, 92) out of the first press fit surface (90, 92) and the second press fit surface (96, 98) and that at least one, preferably each depression (58, 60) provides with its radially oriented depression bottom surface (86, 88) the other press fit surface (96, 98) out of the first press fit surface (90, 92) and the second press fit surface (96, 98).

9. Heat exchanger arrangement according to claim 8,
**characterized in that** in a longitudinal area adjacent to the press fit structure (94) of the at least one flow guidance structure (40, 42) the front surfaces (82, 84) of the at least one web (54, 56) are arranged with a radial distance to the associated depression bottom surface (86, 88).

10. Heat exchanger arrangement according to one of claims 1 to 9,
**characterized in that** the press fit structure (94) comprises at at least one flow guidance structure (40) at least one press fit surface (104, 106) oriented in a first circumferential direction and at least one second press fit surface (112, 114) oriented in a second circumferential direction opposed to the first circumferential direction and pressed against the at least one press fit surface (104, 106).

11. Heat exchanger arrangement according to claim 10,
**characterized in that** at least one, preferably each first web (54) provides with its web side surfaces (100, 102) oriented in the circumferential direction a first press fit surface (104, 106) and **in that** at least one, preferably each depression (58) provides a second press fit surface (112, 114) with its depression side surfaces (108, 110) oriented in the circumferential direction.

12. Heat exchanger arrangement according to claim 11,
**characterized in that** in a longitudinal area joining the press fit structure (94) of the at least one flow guidance structure (40) the web side surfaces (100, 102) are situated with a circumferential distance to the associated depression side surfaces (108, 110).

13. Heat exchanger arrangement according to claim 9 or 12,
**characterized in that** the longitudinal area extends from the press fit structure (94) to a joining region (30) of the circumferential walls (18, 22) and the bottom walls (16, 20).

14. Vehicle heating device comprising a burner section to be fed with combustion air and fuel and a heat exchanger arrangement (10) according to one of the preceding claims transferring combustion heat to a fluid flowing through the fluid flow space (24), preferably to a liquid.

## Revendications

1. Arrangement d'échangeur de chaleur, en particulier pour un dispositif de chauffage pour un véhicule, comprenant:
- un boîtier d'échangeur de chaleur intérieur (12) en forme de pot avec une première paroi de fond (16) et une première paroi circonférentielle (18) se raccordant à la première paroi de fond (16) et entourant un premier axe longitudinal (L),
- un boîtier d'échangeur de chaleur extérieur (14) avec une deuxième paroi de fond (20) et une deuxième paroi circonférentielle (22) se raccordant à la deuxième paroi de fond (20) et entourant l'axe longitudinal (L),
- un espace d'écoulement de fluide (24) formé entre le boîtier d'échangeur de chaleur intérieur (12) et le boîtier d'échangeur de chaleur extérieur (14),
- une première structure de guidage d'écoulement (40) s'étendant essentiellement dans le sens de l'axe longitudinal (L) le long de la première paroi circonférentielle (18) et de la deuxième paroi circonférentielle (22) et une deuxième structure de guidage d'écoulement (42) s'étendant essentiellement dans le sens de l'axe longitudinal (L) le long de la première paroi circonférentielle (18) et de la deuxième paroi circonférentielle (22) avec une distance circonférentielle par rapport à la première structure de guidage d'écoulement (40), où la première structure de guidage d'écoulement (40) et la deuxième structure de guidage d'écoulement (42) répartissent la partie (28) de l'espace d'écoulement de fluide (24) formé entre la première paroi circonférentielle (18) et la deuxième paroi circonférentielle (22) en un premier espace d'écoulement de fluide partiel (44) et un deuxième espace d'écoulement de fluide partiel (46), où chaque structure de guidage d'écoulement (40, 42) comprend à une paroi circonférentielle parmi la première paroi circonférentielle (18) et la deuxième paroi circonférentielle (22) une première traverse (54, 56) radialement en saillie et à l'autre paroi circonférentielle parmi la première paroi circonférentielle (18) et la deuxième paroi circonférentielle (22) une dépression (58, 60) recevant la première traverse (54, 56),
- au moins une ouverture d'entrée de fluide (49) ouverte envers le premier espace d'écoulement de fluide partiel (44) et au moins une ouverture de sortie de fluide (51) ouverte envers le deuxième espace d'écoulement de fluide partiel (46),
**caractérisé par** une structure d'ajustement serré (94) pour fixer le boîtier d'échangeur de chaleur intérieur (12) par rapport au boîtier d'échangeur de chaleur extérieur (14), la structure d'ajustement serré (94) comprenant la première structure de guidage d'écoulement (40) et la deuxième structure de guidage d'écoulement (42) pour former un ajustement serré par un mouvement axial relatif de la traverse (54, 56) d'une structure de guidage d'écoulement (40, 42) respective par rapport à la dépression (58, 60) recevant cette dernière.

2. Arrangement d'échangeur de chaleur selon la revendication 1,
**caractérisé en ce que** l'espace d'écoulement de fluide (24) est fermé étanche aux fluides dans sa région d'extrémité (32) par une structure de joint étanche (34) agissant entre le boîtier d'échangeur de chaleur intérieur (12) et le boîtier d'échangeur de chaleur extérieur (14), ou/et **en ce que** la structure d'ajustement serré (94) est prévue dans une région d'extrémité (32) des parois circonférentielles (18, 22) éloignée de la première paroi de fond (16) et de la deuxième paroi de fond (20).

3. Arrangement d'échangeur de chaleur selon la revendication 1 ou 2,
**caractérisé en ce que** la structure d'ajustement serré (94) a dans le sens de l'axe longitudinal (L) une longueur d'extension dans la gamme comprise entre 0,2 et 0,6, de préférence d'environ 0,4, de la longueur d'extension de la première paroi circonférentielle (18) dans le sens de l'axe longitudinal (L).

4. Arrangement d'échangeur de chaleur selon une des revendications 1 à 3, **caractérisé en ce que** la dépression (58, 60) est formée entre deux deuxièmes traverses (62, 64, 66, 68) radialement en saillie de l'autre paroi circonférentielle (22) avec une distance circonférentielle l'une par rapport à l'autre.

5. Arrangement d'échangeur de chaleur selon une des revendications 1 à 4, **caractérisé en ce que** la première paroi circonférentielle (18) est une des parois circonférentielles et la deuxième paroi circonférentielle (22) est l'autre des parois circonférentielles.

6. Arrangement d'échangeur de chaleur selon une des revendications 1 à 5, **caractérisé en ce qu'**une largeur de la dépression correspond au moins essentiellement à la largeur de traverse de la première traverse (54, 56) engageant cette dernière.

7. Arrangement d'échangeur de chaleur selon une des revendications 1 à 6, **caractérisé en ce que** la structure d'ajustement serré (94) comprend à au moins une structure de guidage d'écoulement (40, 42) une première surface d'ajustement serré (90, 92) orientée radialement vers l'extérieur et une deuxième surface d'ajustement serré (96, 98) orientée radialement vers l'intérieur, serrée contre la première surface d'ajustement serré (90, 92).

8. Arrangement d'échangeur de chaleur selon la revendication 7,
**caractérisé en ce qu'**au moins une traverse, de préférence chaque première traverse (54, 56) prévoit avec sa face frontale (82, 84) orientée radialement une surface d'ajustement serré (90, 92) parmi la première surface d'ajustement serré (90, 92) et la deuxième surface d'ajustement serré (96, 98) et **en ce qu'**au moins une, de préférence chaque dépression (58, 60) prévoit avec sa face de fond de la dépression (86, 88) l'autre surface d'ajustement serré (96, 98) parmi la première surface d'ajustement serré (90, 92) et la deuxième surface d'ajustement serré (96, 98).

9. Arrangement d'échangeur de chaleur selon la revendication 8,
**caractérisé en ce que** dans une région de longueur de ladite au moins une structure de guidage d'écoulement (40, 42) se raccordant à la structure d'ajustement serré (94) les faces frontales (82, 84) de ladite au moins une première traverse (54, 56) ont une distance radiale à la face de fond de la dépression (86, 88).

10. Arrangement d'échangeur de chaleur selon une des revendications 1 à 9, **caractérisé en ce que** la structure d'ajustement serré (94) comprend à au moins une structure de guidage d'écoulement (40) au moins une première surface d'ajustement serré (104, 106) orientée dans un premier sens circonférentiel et au moins une deuxième surface d'ajustement serré (112, 114) orientée dans un deuxième sens circonférentiel opposé au premier sens circonférentiel et pressé contre ladite au moins une première surface d'ajustement serré (104, 106).

11. Arrangement d'échangeur de chaleur selon la revendication 10,
**caractérisé en ce qu'**au moins une, de préférence chaque première traverse (54) prévoit avec ses surfaces latérales de traverse (100, 102) orientées dans un sens circonférentiel respectivement une première surface d'ajustement serré (104, 106) et **en ce qu'**au moins une, de préférence chaque dépression (58) prévoit respectivement une deuxième surface d'ajustement serré (112, 114) avec ses surfaces latérales de dépression (108, 110) orientées dans le sens circonférentiel.

12. Arrangement d'échangeur de chaleur selon la revendication 11, **caractérisé en ce que** dans une région de longueur de ladite au moins une structure de guidage d'écoulement (40) se raccordant à la structure d'ajustement serré, les surfaces latérales de traverse (100, 102) ont une distance circonférentielle par rapport aux surfaces latérales de dépression (108, 110) associées.

13. Arrangement d'échangeur de chaleur selon la revendication 9 ou 12, **caractérisé en ce que** la région de longueur s'étend de la structure d'ajustement serré (94) à une région (30) des parois circonférentielles (18, 22) adjacente aux parois de fond (16, 20).

14. Dispositif de chauffage, comprenant une région de brûleur à alimenter avec de l'air de combustion et un arrangement d'échangeur de chaleur (10) selon une des revendications précédentes pour transmettre de la chaleur de combustion générée dans la région de brûleur à un fluide circulant dans l'espace d'écoulement de fluide (24), de préférence à un liquide.
